(19) Europäisches Patentamt
European Patent Office
Office européen des brevets

(11) **EP 3 163 828 A1**

(12) **EUROPEAN PATENT APPLICATION**

(43) Date of publication:
**03.05.2017 Bulletin 2017/18**

(51) Int Cl.:
***H04L 27/26*** *(2006.01)*     ***H04L 25/02*** *(2006.01)*

(21) Application number: **16162818.5**

(22) Date of filing: **30.03.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.10.2015 CN 201510714377**

(71) Applicant: **ALi Corporation
Hsinchu City 300 (TW)**

(72) Inventor: **YANG, Yong
200233 Shanghai (CN)**

(74) Representative: **Viering, Jentschura & Partner mbB
Patent- und Rechtsanwälte
Kennedydamm 55 / Roßstrasse
40476 Düsseldorf (DE)**

(54) **METHOD FOR ESTIMATING CO-CHANNEL INTERFERENCE AND ESTIMATION CIRCUIT THEREOF**

(57)     A method for estimating co-channel interference (CCI) and an estimation circuit (7) thereof in a receiving device in an orthogonal frequency-division multiplexing (OFDM) system. The receiving device receives an OFDM signal with multiple symbols and conducts a channel estimation operation on the OFDM signal. The method includes the steps herein. Multiple time-domain interpolation results with respect to each of the multiple symbols are extracted, respectively, after a scattered pilot time-domain interpolation during the channel estimation operation (S101). A differential operation and a first normalization operation are conducted on the multiple time-domain interpolation results so as to generate an output signal (S 103). An interpolation operation is conducted on the output signal and the output signal having undergone the interpolation operation is determined as an error estimation signal with respect to the OFDM signal affected by the CCI (S105).

Extracting multiple time-domain interpolation results with respect to each of the multiple symbols, respectively, after a scattered pilot time-domain interpolation during the channel estimation operation   — S101

Conducting a differential operation and a first normalization operation on the multiple time-domain interpolation results so as to generate an output signal   — S103

Conducting an interpolation operation on the output signal and determining the output signal having undergone the interpolation operation as an error estimation signal with respect to the OFDM signal affected by the CCI   — S105

FIG.1A

EP 3 163 828 A1

**Description**

BACKGROUND

1. Technical Field

The present invention generally relates to an orthogonal frequency-division multiplexing (OFDM) technology, and more particularly, to a method for estimating co-channel interference (CCI) in an OFDM system and an estimation circuit thereof.

2. Description of Related Art

Orthogonal frequency-division multiplexing (OFDM) is a multicarrier modulation technology, which has been widely used in wideband digital communication. In OFDM, finite bandwidth is divided into multiple subchannels, and multiple sub-carriers are used for parallel transmission therein. Each of the sub-carriers is differently modulated to carry different numbers of data. Moreover, since there is orthogonality between each of the sub-carriers, compared with the conventional frequency division multiplexing (FDM) technology, the OFDM technology has higher spectrum usage efficiency.

However, since a band is shared by multiple systems, mutual interference inevitably happens. More particularly, considerable CCI appears in PAL, SECAM or NTSC signals in a narrowband. For example, when a signal transmitted through an OFDM system is affected by CCI, information on part of the sub-carriers may be lost to reduce the accuracy of channel estimation and increase the loss of the signal-to-noise ratio (SNR). As a result, the performance of the system falls dramatically. In view of the above, for a receiver end of a regular OFDM system, it is crucial to effectively detect CCI, estimate CCI and eliminate the effect by CCI so as to improve the performance of the system.

Furthermore, for common OFDM system, CCI estimation is mostly conducted in the frequency domain, which can be realized only when some of the parameters are known. However, since parameter estimation in the time domain would also be affected by CCI, CCI estimation in the frequency domain is nearly useless for a receiver end in the OFDM system.

SUMMARY

One embodiment of the present invention provides a method for estimating co-channel interference (CCI) in a receiving device in an orthogonal frequency-division multiplexing (OFDM) system. The receiving device receives an OFDM signal with multiple symbols and conducts a channel estimation operation on the OFDM signal. The method includes the steps herein. Multiple time-domain interpolation results with respect to each of the multiple symbols are extracted, respectively, after a scattered pilot time-domain interpolation during the channel estimation operation. A differential operation and a first normalization operation are conducted on the multiple time-domain interpolation results so as to generate an output signal. An interpolation operation is conducted on the output signal and the output signal having undergone the interpolation operation is determined as an error estimation signal with respect to the OFDM signal affected by the CCI.

One embodiment of the present invention further provides an estimation circuit for co-channel interference (CCI) in a receiving device in an orthogonal frequency-division multiplexing (OFDM) system. The receiving device receives an OFDM signal with multiple symbols and conducts a channel estimation operation on the OFDM signal. The estimation circuit includes an extraction module, a first processing module and a second processing module. The extraction module is configured to extract multiple time-domain interpolation results with respect to each of the multiple symbols, respectively, after a scattered pilot time-domain interpolation during the channel estimation operation. The first processing module is configured to conduct a differential operation and a first normalization operation on the multiple time-domain interpolation results so as to generate an output signal. The second processing module is configured to conduct an interpolation operation on the output signal and determine the output signal having undergone the interpolation operation as an error estimation signal with respect to the OFDM signal affected by the CCI.

As stated above, the method for estimating co-channel interference (CCI) and the estimation circuit thereof according to the present invention conduct CCI estimation by using the time-domain interpolation results, and therefore problems due to the effects of CCI can be effectively overcome. In addition, both non-data symbols and data symbols are taken into consideration so that the CCI estimation results are more reliable, which thus helps to improve the performance of the overall system.

In order to further understand the techniques, means and effects of the present disclosure, the following detailed descriptions and appended drawings are hereby referred to, such that, and through which, the purposes, features and aspects of the present disclosure can be thoroughly and concretely appreciated; however, the appended drawings are

EP 3 163 828 A1

merely provided for reference and illustration, without any intention to be used for limiting the present disclosure.

BRIEF DESCRIPTION OF THE DRAWINGS

The accompanying drawings are included to provide a further understanding of the present disclosure, and are incorporated in and constitute a part of this specification. The drawings illustrate exemplary embodiments of the present disclosure and, together with the description, serve to explain the principles of the present disclosure.

FIG. 1A is a flowchart of a method for estimating co-channel interference (CCI) according to one embodiment of the present invention;

FIG. 1B is a flowchart of a method for estimating co-channel interference (CCI) according to another embodiment of the present invention;

FIG. 2 is a schematic diagram of a frame structure of an OFDM signal in a DVB-T2 system according to one embodiment of the present invention;

FIG. 3 is a flowchart of a first normalization operation in a method for estimating CCI according to one embodiment of the present invention;

FIG. 4A is a schematic diagram of an error matrix of NxK in a method for estimating CCI according to one embodiment of the present invention;

FIG. 4B is a schematic diagram of an error matrix of NxK in a method for estimating CCI according to another embodiment of the present invention;

FIG. 5 is a schematic diagram showing the operation of a second normalization operation in a method for estimating CCI according to one embodiment of the present invention;

FIG. 6 is a flowchart of a method for estimating, detecting and eliminating CCI according to one embodiment of the present invention; and

FIG. 7 is a block diagram of an estimation circuit for CCI according to one embodiment of the present invention.

DESCRIPTION OF THE EXEMPLARY EMBODIMENTS

The detailed description set forth below in connection with the appended drawings is intended as a description of certain embodiments of the present disclosure, and is not intended to represent the only forms that may be developed or utilized. The description sets forth the various functions in connection with the illustrated embodiments, but it is to be understood, however, that the same or equivalent functions may be accomplished by different embodiments that are also intended to be encompassed within the scope of the present disclosure.

More particularly, the method and the circuit for estimating co-channel interference provided by the present invention are suitable for use with any receiving device of an OFDM system. For example, the OFDM system can be an integrated services digital broadcasting - terrestrial (ISDB-T) system, a digital video broadcasting - terrestrial (DVB-T) system or a digital video broadcasting - second generation terrestrial (DVB-T2) system or the like, to which, however, the present invention not limited. In short, the receiving device of the OFDM system receives an OFDM signal with multiple symbols and conducts a channel estimation operation on the OFDM signal.

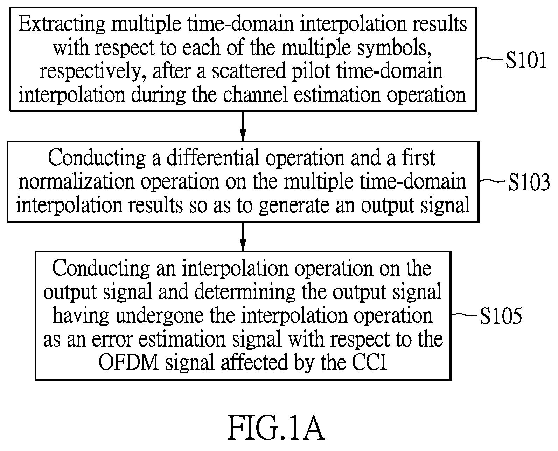

Referring to FIG. 1A, FIG. 1A is a flowchart of a method for estimating co-channel interference (CCI) according to one embodiment of the present invention. First, in Step S101, multiple time-domain interpolation results are extracted with respect to each of the multiple symbols, respectively, after a scattered pilot time-domain interpolation during the channel estimation operation. Then, In Step S103, a differential operation and a first normalization operation are conducted on the multiple time-domain interpolation results so as to generate an output signal. Last, in Step S105, an interpolation operation is conducted on the output signal and the output signal having undergone the interpolation operation is determined as an error estimation signal with respect to the OFDM signal affected by the CCI.

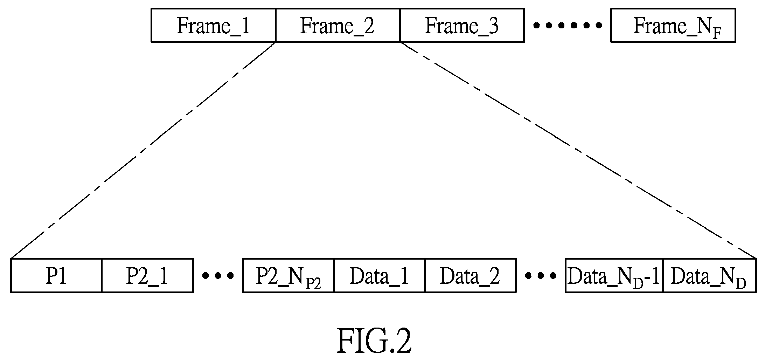

For better understanding, the estimation method is exemplified by describing a receiving device in a DVB-T2 system, to which, however, the present invention is not limited. Referring to FIG. 2, FIG. 2 is a schematic diagram of a frame structure of an OFDM signal in a DVB-T2 system according to one embodiment of the present invention. Accordingly, based on the specification standards, each frame of an OFDM signal in the DVB-T2 system includes a P1 symbol, at least one P2 symbol and multiple data symbols. The P1 symbol is determined to have 2048 carriers, which are labeled at the beginning of each frame for synchronous detection. The P2 symbol has first-layer (L1) data for providing a decoder device with parameter information, such as the pilot pattern, the guard interval (GI) ratio, the modulation, the symbol rate or the like, required to decode each data symbol. The multiple data symbols carry the actual payload data.

According to the above teachings as well as known information, a person with ordinary skill in the art should understand that the method for estimating CCI of the present invention is implemented after synchronous detection is conducted on the P1 symbol. Therefore, the OFDM signal received by the receiving device of the present invention indicates the OFDM signal has undergone the synchronous detection. It should be noted that, the present invention is not limited to how the synchronous detection is conducted on the P1 symbol and a person with ordinary skill in the art may make any modifications according to practical demands. In other words, the multiple symbols of the OFDM signal received by the receiving device of the present invention include at least one P2 symbol and multiple data symbols as shown in FIG. 2.

On the other hand, the channel estimating operation conducted by the receiving device of the present invention is a conventional art of a receiver end in a regular OFDM system. For example, for an OFDM signal having undergone the synchronous detection, the receiving device extracts each scattered pilot sub-carrier from the OFDM signal and acquires channel response with respect to the OFDM system by sequentially conducting the time-domain interpolation and the frequency-domain interpolation on the extracted pilot sub-carriers.

According to the above teachings, a person with ordinary skill in the art should understand that one of the methods for estimating CCI of the present invention may estimate the CCI directly based on the time-domain interpolation results of the pilot sub-carriers so as to effectively overcome the estimation problems caused by the CCI and improve the efficiency of CCI estimation. Moreover, the operation principles of the channel estimating operation are conventional to the persons with ordinary skill in the art, and thus detailed description of the channel estimation operation is not repeated herein.

On the other hand, the differential operation conducted in Step S103 can be conventional backward difference or forward difference. In short, the present invention is not limited thereto and thus detailed description of the differential operation is not repeated.

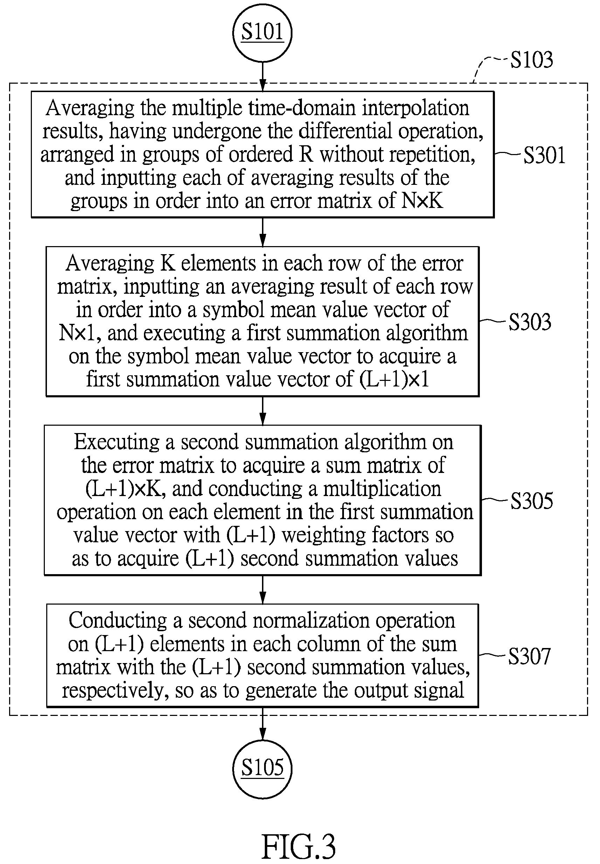

In order to further illustrate the details of the first normalization operation in Step S103, the present invention further provides a first normalization operation according to one embodiment. Referring to FIG. 3, FIG. 3 is a flowchart of a first normalization operation in a method for estimating CCI according to one embodiment of the present invention. Some steps in FIG. 3 similar to the steps in FIG. 1A are labeled by similar reference numbers, and thus descriptions thereof are not repeated herein.

Referring to both FIG. 1A and FIG. 3, Step S103 further includes Steps S301 to S307. First, in Step S301, every R of the multiple time-domain interpolation results, having undergone the differential operation, are averaged, and each of averaging results is input in order into an error matrix of NxK. Then, in Step S303, K elements in each row of the error matrix are averaged, an averaging result of each row is input in order into a symbol mean value vector of Nx1, and a first summation algorithm is executed on the symbol mean value vector to acquire a first summation value vector of (L+1)x1. Then, in Step S305, a second summation algorithm is executed on the error matrix to acquire a sum matrix of (L+1)xK, and a multiplication operation is conducted on each element in the first summation value vector with (L+1) weighting factors so as to acquire (L+1) second summation values. Last, in Step S307, a second normalization operation is conducted on (L+1) elements in each column of the sum matrix with the (L+1) second summation values, respectively, so as to generate the output signal. R, N and K are all positive integers. N is 2 to the power of L.

According to the above teachings, a person with ordinary skill in the art should understand that the average operation in Step S301 is a normal block average operation. R indicates the average length of a block. Moreover, K indicates a length value to be stored after the block average operation, while N indicates a symbol length stored after the block average operation. It should be noted that the number of pilot sub-carriers of the non-data symbols (for example, the P2 symbol in FIG. 2) is much larger than the number of pilot sub-carriers of the data symbols. In addition, for the same frame, the number of non-data symbols and the number of data symbol are not exactly the same. Therefore, in Step S103, for the time-domain interpolation results with respect to the data symbols and the non-data symbols, respectively, after the differential operation, a first normalization operation can be conducted using different R, N and K values, respectively. In view of this, a person with ordinary skill in the art may understand that R and N are both dynamic variables varying according to the transfer protocols of the OFDM system and the types of the multiple symbols. The transfer protocols include the frame types, the FFT intensity or the pilot pattern and the like.

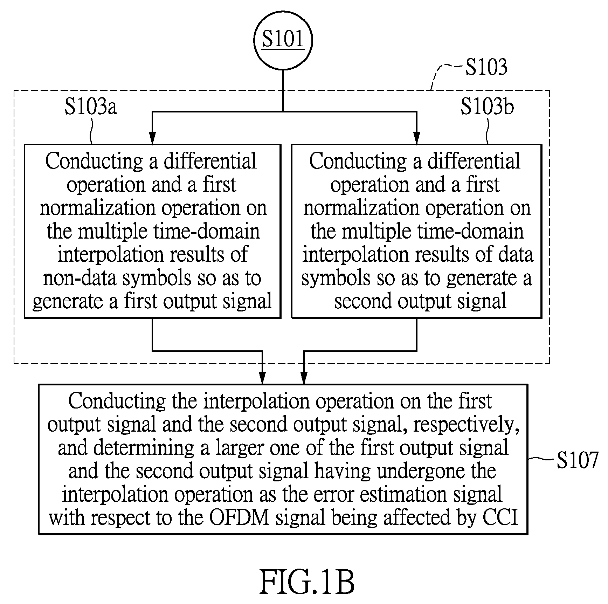

Furthermore, referring to FIG. 1B, FIG. 1B is a flowchart of a method for estimating CCI according to another embodiment of the present invention. Some steps in FIG. 1B similar to the steps in FIG. 1A are labeled by similar reference numbers, and thus descriptions thereof are not repeated herein. As previously stated, since the multiple symbols of the OFDM signal received by the receiving device according to the present invention include at least one P2 symbol and data symbols (i.e., non-data symbols and data symbols), compared with Step S103 in FIG. 1A, Step S103 in FIG. 1B is further divided into two steps (i.e., Step S103a and Step S103b) to conduct a differential operation and a first normalization operation respectively on the multiple time-domain interpolation results of non-data symbols so as to generate a first output signal and on the multiple time-domain interpolation results of data symbols so as to generate a second output signal. Following S103a and S103b, in Step S107, the interpolation operation is conducted on the first output signal and on the second output signal, respectively, and a larger one of the first output signal and the second output signal, having undergone the interpolation operation, is determined as the error estimation signal with respect to the OFDM signal being affected by CCI.

In other words, when the differential operation and the first normalization operation are conducted on the time-domain interpolation results of the non-data symbols in Step S103a, the first normalization operation is conducted on the time-domain interpolation results of the non-data symbols having undergone the differential operation in Step S301 to generate the first output signal in Step S307. On the contrary, when the differential operation and the first normalization operation are conducted on the time-domain interpolation results of the non-data symbols in Step S103b, the first normalization operation is conducted on the time-domain interpolation results of the data symbols having undergone the differential operation in Step S301 to generate the second output signal in Step S307.

In the following embodiments, the first normalization operation is only conducted on the time-domain interpolation results of the non-data symbols having undergone the differential operation as an example, to which, however, the present invention is not limited. For the time-domain interpolation results of the data symbols, the first normalization operation is similarly conducted.

For example, assuming that the number of time-domain interpolation results of the non-data symbols extracted in Step S103a is 4640, the multiple time-domain interpolation results, having undergone the differential operation, arranged in groups of ordered 8 (i.e., R=8) without repetition are averaged and each of the averaging results of the groups is input in order into an error matrix of 16x580 (i.e., N=16 and K=580) in Step S301.

Accordingly, one embodiment of the present invention is to dynamically adjust R, N and K values based on the different transfer protocols of the OFDM system so as to achieve the optimal performance and the lowest cost of the whole system. For example in the above-mentioned embodiment where R=8 and N=16, when R is augmented to 16, the value of K is reduced to 290 (for example, K=4640/16=290). Therefore, the size of the error matrix (i.e., 16x290) is relatively reduced.

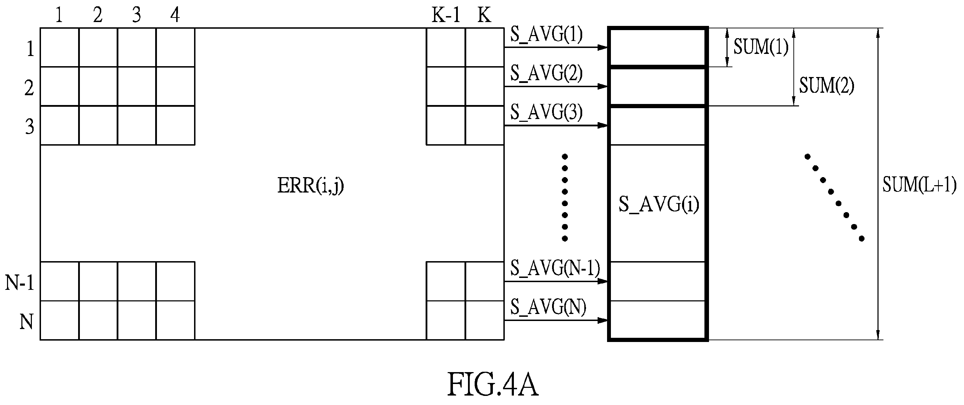

Furthermore, referring to FIG. 4A, FIG. 4A is a schematic diagram of an error matrix of N rows xK columns in a method for estimating CCI according to one embodiment of the present invention. Therefore, in Step S303, the symbol mean value vector obtained by the average operation on each row of the error matrix can be expressed as:

$$S\_AVG(i) = (1/K)\sum_{j=1}^{K} ERR(i, j) \qquad \text{Equation (1)}$$

where $S\_AVG(i)$ is the value of the $i^{th}$ element in the symbol mean value vector, $1 \leq i \leq N$, $ERR(i, j)$ is the value of the element in the $i^{th}$ row and the $j^{th}$ column of the error matrix and $1 \leq j \leq K$. Then, in Step S303, the first summation value vector obtained by performing the first summation algorithm is expressed as:

$$SUM(l) = \sum_{i=1}^{2^{(l-1)}} S\_AVG(i) \qquad \text{Equation (2)}$$

where $SUM(l)$ is the value of the $l^{th}$ element in the first summation value vector and $1 \leq l \leq L+1$. For example, in a case where N=16, a first summation value vector of 5x1 can be obtained in Step S303. The elements in the first summation value vector may be simplified respectively as:

$$SUM(1) = S\_AVG(1);$$

$$SUM(2) = S\_AVG(1) + S\_AVG(2);$$

$$SUM(3) = S\_AVG(1) + S\_AVG(2) + S\_AVG(3) + S\_AVG(4);$$

$$SUM(4) = S\_AVG(1) + S\_AVG(2) + S\_AVG(3) + ...... + S\_AVG(7) + S\_AVG(8);$$

$$SUM(5) = S\_AVG(1) + S\_AVG(2) + S\_AVG(3) + ...... + S\_AVG(15) + S\_AVG(16);$$

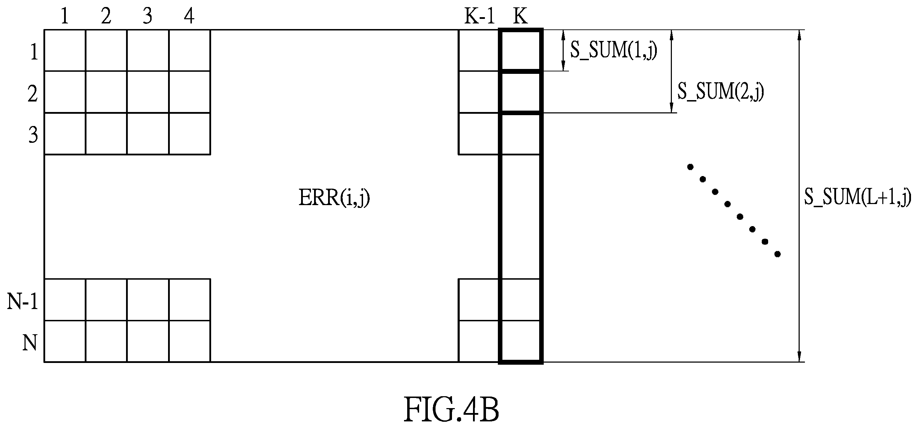

Moreover, referring to FIG. 4B, FIG. 4B is a schematic diagram of an error matrix of N rows xK columns in a method for estimating CCI according to another embodiment of the present invention. Therefore, in Step S305, the sum matrix obtained by performing the second summation algorithm may be expressed as:

$$S\_SUM(l,j) = \sum_{i=1}^{2^{(l-1)}} ERR(i,j) \qquad \text{Equation (3)}$$

where $S\_SUM(l, j)$ is the value of the element in the $l^{th}$ row and *the $j^{th}$* column of the sum matrix and $1 \leq j \leq K$. For example, in a case where N=16 and K=580, a sum matrix of 5x580 may be obtained in Step S305. The elements in the sum matrix can be simplified respectively as:

$$S\_SUM(1,1) = ERR(1,1);$$
$$S\_SUM(2,1) = ERR(1,1) + ERR(2,1);$$
$$S\_SUM(3,1) = ERR(1,1) + ERR(2,1) + ERR(3,1) + ERR(4,1);$$
$$S\_SUM(4,1) = ERR(1,1) + ERR(2,1) + ...... + ERR(7,1) + ERR(8,1);$$
$$S\_SUM(5,1) = ERR(1,1) + ERR(2,1) + ...... + ERR(15,1) + ERR(16,1);$$
$$S\_SUM(1,2) = ERR(1,2);$$
$$S\_SUM(2,2) = ERR(1,2) + ERR(2,2);$$
$$\Downarrow$$
$$S\_SUM(4,580) = ERR(1,580) + ERR(1,580) + ...... + ERR(7,580) + ERR(8,580);$$
$$S\_SUM(5,580) = ERR(1,580) + ERR(2,580) + ...... + ERR(15,580) + ERR(16,580);$$

On the other hand, in Step S305, a multiplication operation may be conducted respectively on each element in the first summation value vector *SUM (l)* with (L+1) weighting factors so as to acquire (L+1) second summation values. For example, five second summation values $SUM'(1) \sim SUM'(5)$ may be acquired in the present embodiment.

It should be noted that, according to the above teachings, a person with ordinary skill in the art should understand that the second summation algorithm in Step S305 indicates that the N elements in each column of the error matrix are grouped, respectively, in accumulated ascending powers of two. In other words, for each column of the error matrix, different accumulated values can be obtained in different time periods. In addition, the multiplication operation of each element in the first summation value vector *SUM (l)* with one of the weighting factors indicates that a calibration operation is conducted on each element in the first summation value vector *SUM (l)* to obtain the optimal receiving performance. However, the present invention is not limited to how the weighting factors are implemented and a person with ordinary skill in the art may make any modifications according to practical demand. Alternatively, the calibration operation on each element in the first summation value vector *SUM (l)* may also be omitted.

In the present embodiment, Step S307 is performed to conduct the second normalization operation on each of the five elements $S\_SUM(1, j) \sim S\_SUM(5, j)$ in each column of the sum matrix and the second summation values $SUM'(1) \sim SUM'(5),$ respectively, so as to obtain the first output signal. Accordingly, Step S307 performs the detection based on different time periods to achieve the detection on dynamic interference.

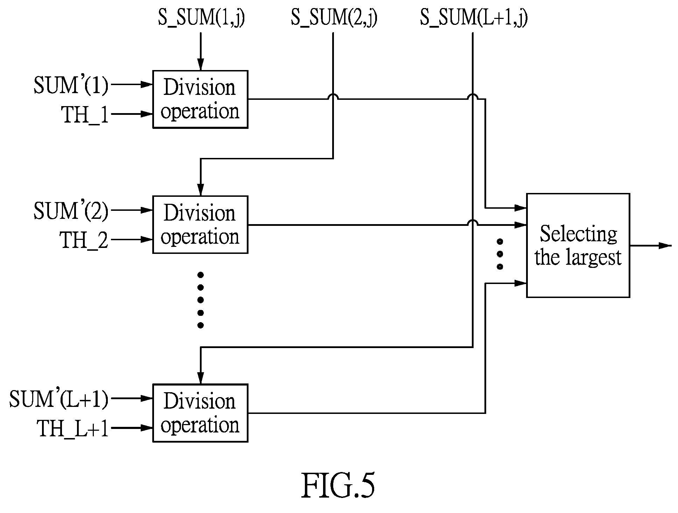

To further illustrate the details of the second normalization operation in Step S307, the present invention further provides an implementation of the second normalization operation. Referring to FIG. 5, FIG. 5 is a schematic diagram showing the operation of a second normalization operation in a method for estimating CCI according to one embodiment of the present invention.

Furthermore, the second normalization operation is conducted to compare, for example, by a division operation, the (L+1) elements in the $j^{th}$ column of the sum matrix, one by one, with the (L+1) second summation values, from the first to the $(L+1)^{th}$ to determine the ratios of the local errors to the total error and further compare the results of the previous comparison, one by one, with the corresponding threshold values (for example, $TH\_1 \sim TH\_ L+1)$ *to* obtain the (L+1)ratios of the local errors to the total error and select a largest value from the results as an output value, where j is from 1 to K.

For example, in the present embodiment, the receiving device divides each of the elements $S\_SUM(1, j) \sim S\_SUM(5, j)$ in each column of the sum matrix, one by one, by the second summation values $SUM'(1) \sim SUM'(5)$ and divides each of the dividing results (for example, $S\_SUM(1, j)/SUM'(1) \sim S\_SUM(5, j)/SUM'(5)$ ), one by one, by the corresponding threshold values (for example, $TH\_1 \sim TH\_5$ ) to obtain a largest value from all of the dividing results (for example, five dividing results in this example) as an output value, which effectively increases the precision of CCI estimation. In short, the present invention is not limited to how the second normalization operation is implemented and a person with ordinary skill in the art may make any modifications according to practical demands. Therefore, in Step S307, the results of each column of the sum matrix having undergone the second normalization operation may be defined as the first or the second output signal. The results of the time-domain interpolation results of the non-data symbols having undergone the first normalization operation may be defined as the first output signal. The results of the time-domain interpolation results of the data symbols having undergone the first normalization operation may be defined as the second output signal.

Referring back to FIG. 1B, in Step S107, an interpolation operation is conducted on the results (i.e., the first output signal and the second output signal) of the Step S103 (i.e., Step S103a and Step S103b), respectively, to obtain a larger one of the results of the interpolation operation as the error estimation signal when the OFDM signal is affected by CCI. It should be noted that the interpolation operation is conducted using any linear or non-linear equation. In short, the present invention is not limited to how the interpolation operation is implemented and a person with ordinary skill in the art may make any modifications according to practical demands. According to the above teachings, a person with ordinary skill in the art should understand that one embodiment of Step S103a, Step S103b and Step S107 according to the present invention is to take non-data symbols and data symbols into account to enhance the reliability of CCI estimation.

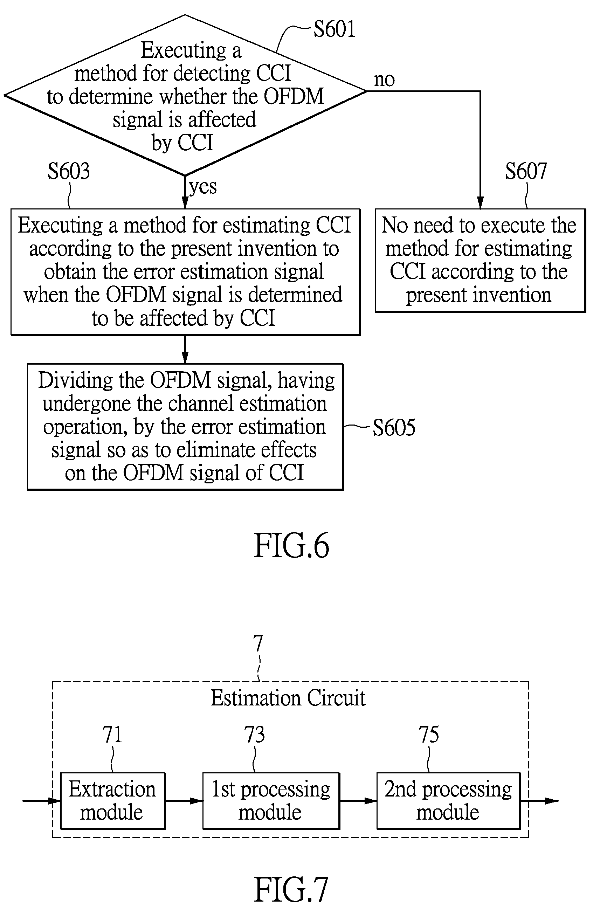

On the other hand, as previously stated, it is crucial to effectively detect CCI, estimate CCI and eliminate the effect by CCI so as to improve the performance of the system. Therefore, referring to FIG. 6, FIG. 6 is a flowchart of a method for estimating, detecting and eliminating CCI according to one embodiment of the present invention.

First, in Step S601, a method for detecting CCI is executed to determine whether the OFDM signal is affected by CCI. Second, in Step S603, a method for estimating CCI according to the present invention is executed to obtain the error estimation signal when the OFDM signal is determined to be affected by CCI. In other words, the method for estimating CCI according to the present invention is not only capable of determining whether the OFDM signal is affected by CCI, but also capable of evaluating the extent that the OFDM signal is affected by CCI. Then, in Step S605, a dividing operation is conducted on the OFDM signal, having undergone the channel estimation operation, by the error estimation signal so as to eliminate effects of the OFDM signal by the CCI. On the contrary, in Step S607, the receiving device does not need to execute the method for estimating CCI according to the present invention when the OFDM signal is determined to be unaffected by CCI.

It should be noted that the present invention is not limited to how the method for detecting CCI is implemented and a person with ordinary skill in the art may make any modifications according to practical demand. According to the above teachings, a person with ordinary skill in the art should understand that, in the method for estimating CCI according to the present invention, the receiving device only has to perform a dividing operation on the OFDM signal (for example, Y/H, where Y denotes the received OFDM signal) restored by undergoing the channel estimation operation (i.e., channel response H) with the error estimation signal so as to effectively eliminate the effects by CCI.

To further illustrate the process of the method for estimating CCI, the present invention further provides an estimation circuit for CCI. Referring to FIG. 7, FIG. 7 is a block diagram of an estimation circuit for CCI according to one embodiment of the present invention. However, the estimation circuit 7 below is only exemplary and not intended to limit the scope of the present invention.

The estimation circuit 7 can be used with a decoder device in any OFDM system. The receiving device receives an OFDM signal including at least one non-data symbol and multiple data symbols. The estimation circuit 7 includes an extraction module 71, a first processing module 73, and a second processing module 75. These elements can be implemented using hardware circuits or the combination of hardware circuits and firmware or software. However, the present invention is not limited to how the estimation circuit 7 is implemented. Moreover, the extraction module 71, the first processing module 73 and the second processing module 75 can be integrated or discretely installed, to which the present invention is not limited.

As previously stated, the method for estimating CCI of the present invention is implemented after a synchronous detection is conducted on the P1 symbol. The OFDM signal received by the receiving device of the present invention indicates the OFDM signal has undergone the synchronous detection. Moreover, the estimation circuit 7 in the present embodiment can conduct the method for estimating CCI as shown in FIG. 1A. Therefore, please refer to both FIG. 1A and FIG. 2 for better understanding and descriptions thereof are not repeated herein.

Furthermore, the extraction module 71 is configured to extract multiple time-domain interpolation results with respect to each of the multiple symbols, respectively, after a discrete pilot time-domain interpolation during the channel estimation operation. The first processing module 73 is configured to conduct a differential operation and a first normalization operation on the multiple time-domain interpolation results so as to generate an output signal. The second processing module 75 is configured to conduct an interpolation operation on the output signal and use the output signal having undergone the interpolation operation as an error estimation signal with respect to the OFDM signal affected by the CCI.

More particularly, the OFDM system may be a DVB-T2 system, and the symbols include non-data symbols (i.e., the P2 symbol) and data symbols, to which the present invention is not limited. Therefore, the estimation circuit 7 in the present embodiment can be used with the method for estimating CCI in FIG. 1B. Accordingly, please refer to FIG. 1B and FIG. 2 for better understanding and description thereof is not repeated herein.

Furthermore, the first processing module 73 indicates that the differential operation and the first normalization operation are conducted on the time-domain interpolation results of the non-data symbols and the time-domain interpolation results of the data symbols, respectively, to extract the results as the first output signal and the second output signal.

Moreover, the second processing module 75 conducts an interpolation operation on the first output signal and the second output signal, respectively, and determines a larger one of the first output signal and the second output signal after the interpolation operation as the error estimation signal with respect to the OFDM signal affected by CCI.

Furthermore, the first processing module 73 in the present embodiment is capable of conducting the first normalization operation in FIG. 3. Therefore, please refer to FIG. 3 for better understanding and description thereof is not repeated herein.

It should be noted that, during the first normalization operation in FIG. 3, R and N are both dynamic variables varying according to the transfer protocols of the OFDM system and the types of the multiple symbols. The transfer protocols include the frame types, the FFT intensity or the pilot pattern and the like. Accordingly, one spirit of the first processing module 73 according to the present invention is to dynamically adjust R, N and K values based on the different transfer protocols of the OFDM system so as to achieve the optimal performance and the lowest cost of the whole system.

Accordingly, when the first processing module 73 conducts the first normalization operation, the first summation value vector obtained by the first summation algorithm can be expressed as Equation (2) and the sum matrix obtained by the second summation algorithm can be expressed as Equation (3). Moreover, the second normalization operation conducted by the first processing module is as shown in FIG. 5.

Last, in the estimation circuit 7 in the present embodiment, the receiving device only has to perform a dividing operation on the OFDM signal (for example, Y/H, where H denotes channel response and Y denotes the received OFDM signal) restored by undergoing the channel estimation operation with the error estimation signal output by the second processing module 75 so as to effectively eliminate the effects by CCI.

As stated above, the method for estimating co-channel interference (CCI) and the estimation circuit thereof according to the present invention conduct CCI estimation by using the time-domain interpolation results, and therefore problems due to the effects of CCI can be effectively overcome. In addition, both non-data symbols and data symbols are taken into consideration so that the CCI estimation results are more reliable, which thus helps to improve the performance of the overall system.

The above-mentioned descriptions represent merely the exemplary embodiments of the present disclosure, without any intention to limit the scope of the present disclosure thereto. Various equivalent changes, alterations or modifications based on the claims of present disclosure are all consequently viewed as being embraced by the scope of the present disclosure.

**Claims**

1. A method for estimating co-channel interference (CCI) in a receiving device in an orthogonal frequency-division multiplexing (OFDM) system, said receiving device receiving an OFDM signal with multiple symbols and conducting a channel estimation operation on said OFDM signal, **characterized in that** said method comprises steps of:

   extracting multiple time-domain interpolation results with respect to each of said multiple symbols, respectively, after a scattered pilot time-domain interpolation during said channel estimation operation (S101);
   conducting a differential operation and a first normalization operation on said multiple time-domain interpolation results so as to generate an output signal (S103); and
   conducting an interpolation operation on said output signal and determining said output signal having undergone said interpolation operation as an error estimation signal (S105).

2. The method of claim 1, wherein said first normalization operation (S103) comprises steps of:

   sequentially averaging every R of said multiple time-domain interpolation results undergone said differential operation, and inputting each of averaging results of said groups in order into an error matrix of NxK (S301);
   averaging K elements in each row of said error matrix, inputting an averaging result of said each row in order into a symbol mean value vector of Nx1, and executing a first summation algorithm on said symbol mean value vector to acquire a first summation value vector of (L+1)x1 (S303);
   executing a second summation algorithm on said error matrix to acquire a sum matrix of (L+1)xK, and conducting a multiplication operation on each element in said first summation value vector with (L+1) weighting factors so as to acquire (L+1) second summation values (S305); and
   conducting a second normalization operation on (L+1) elements in each column of said sum matrix with said (L+1) second summation values, respectively, so as to generate said output signal (S307),

wherein R, N and K are all positive integers; N is 2 to the power of L; and R and N are both dynamic variables varying according to the transfer protocols of said OFDM system and the types of said multiple symbols.

3. The method of claim 1, wherein said multiple symbols comprise non-data symbols and data symbols and, in the step of conducting said differential operation and said first normalization operation on said multiple time-domain interpolation results, said multiple time-domain interpolation results are processed to generate a first output signal with respect to said data symbols and a second output signal with respect to said non-data symbols (S103a, S103b).

4. The method of claim 3, wherein the step of conducting said interpolation operation on said output signal and determining said output signal undergone said interpolation operation as said error estimation signal further comprises a step of:

   conducting said interpolation operation on said first output signal and said second output signal, respectively, and determining a larger one of said first output signal and said second output signal having undergone said interpolation operation as said error estimation signal (S107).

5. The method of claim 2, wherein the value of the $l$th element in said first summation value vector is $SUM(l)$, wherein

$$SUM(l) = \sum_{i=1}^{2^{(l-1)}} S\_AVG(i),$$ and $S\_AVG(i)$ is the value of the $i$th element in said symbol mean value vector, wherein $1 \leq l \leq L+1$.

6. The method of claim 5, wherein the value of the element in the $l$th row and *the $j$th* column of said sum matrix is

   $S\_SUM(l, j)$, wherein $$S\_SUM(l, j) = \sum_{i=1}^{2^{(l-1)}} ERR(i, j),$$ and $ERR(i, j)$ is the value of the element in *the $i$th* row and *the $j$th* column of said error matrix, wherein $1 \leq j \leq K$.

7. The method of claim 6, wherein said second normalization operation comprises a step of:

   dividing (L+1) elements in the $j$th column of said sum matrix by said (L+1) second summation values, one on one, and determining a largest one of dividing results as an output value.

8. The method of claim 7, wherein, when said OFDM signal is determined to be affected by said CCI, receiving device dividing said OFDM signal, having undergone said channel estimation operation, by said error estimation signal so as to eliminate said CCI (S605).

9. An estimation circuit (7) for estimating co-channel interference (CCI) in a receiving device in an orthogonal frequency-division multiplexing (OFDM) system, said receiving device receiving an OFDM signal with multiple symbols and conducting a channel estimation operation on said OFDM signal, **characterized in that** said estimation circuit (7) comprises:

   an extraction module (71) configured to extract multiple time-domain interpolation results with respect to each of said multiple symbols, respectively, after a scattered pilot time-domain interpolation during said channel estimation operation;
   a first processing module (73) configured to conduct a differential operation and a first normalization operation on said multiple time-domain interpolation results so as to generate an output signal; and
   a second processing module (75) configured to conduct an interpolation operation on said output signal and determine said output signal having undergone said interpolation operation as an error estimation signal.

10. The estimation circuit of claim 9, wherein said first normalization operation comprises steps of:

   sequentially averaging every R of said multiple time-domain interpolation results undergone said differential operation, and inputting each of averaging results of said groups in order into an error matrix of NxK (S301);
   averaging K elements in each row of said error matrix, inputting an averaging result of each row in order into a symbol mean value vector of Nx1, and executing a first summation algorithm on said symbol mean value vector to acquire a first summation value vector of (L+1)x1 (S303);
   executing a second summation algorithm on said error matrix to acquire a sum matrix of (L+1)xK, and conducting a multiplication operation on each element in said first summation value vector with (L+1) weighting factors so as to acquire (L+1) second summation values (S305); and

conducting a second normalization operation on (L+1) elements in each column of said sum matrix with said (L+1) second summation values, respectively, so as to generate said output signal (S307),

wherein R, N and K are all positive integers; N is 2 to the power of L; and R and N are both dynamic variables varying according to the transfer protocols of said OFDM system and the types of said multiple symbols.

11. The estimation circuit of claim 9, wherein said multiple symbols comprise non-data symbols and data symbols, and said first processing module (73) conducts said differential operation and said first normalization operation on said multiple time-domain interpolation results respectively, to generate a first output signal with respect to said data symbols and a second output signal with respect to said non-data symbols.

12. The estimation circuit of claim 11, wherein said second processing module (75) conducts said interpolation operation on said first output signal and said second output signal, respectively, and determines a larger one of said first output signal and said second output signal having undergone said interpolation operation as said error estimation signal.

13. The estimation circuit of claim 10, wherein the value of the $l^{th}$ element in said first summation value vector is $SUM(l)$,

wherein $SUM(l) = \sum_{i=1}^{2^{(l-1)}} S\_AVG(i)$ , and $S\_AVG(i)$ is the value of the $i^{th}$ element in said symbol mean value vector, wherein $1 \leq l \leq L+1$.

14. The estimation circuit of claim 13, wherein the value of the element in the $l^{th}$ row and the $j^{th}$ column of said sum matrix is $S\_SUM(l, j)$, wherein $S\_SUM(l, j) = \sum_{i=1}^{2^{(l-1)}} ERR(i, j)$, and $ERR(i, j)$ is the value of the element in the $i^{th}$ row and the $j^{th}$ column of said error matrix, wherein $1 \leq j \leq K$.

15. The estimation circuit of claim 14, wherein said second normalization operation comprises a step of:

dividing (L+1) elements in the $j^{th}$ column of said sum matrix by said (L+1) second summation values, one on one, and determining a largest one of dividing results as an output value.

| Extracting multiple time-domain interpolation results with respect to each of the multiple symbols, respectively, after a scattered pilot time-domain interpolation during the channel estimation operation | ~S101 |

| Conducting a differential operation and a first normalization operation on the multiple time-domain interpolation results so as to generate an output signal | ~S103 |

| Conducting an interpolation operation on the output signal and determining the output signal having undergone the interpolation operation as an error estimation signal with respect to the OFDM signal affected by the CCI | ~S105 |

# FIG.1A

S101

S103

S103a

S103b

| Conducting a differential operation and a first normalization operation on the multiple time-domain interpolation results of non-data symbols so as to generate a first output signal | Conducting a differential operation and a first normalization operation on the multiple time-domain interpolation results of data symbols so as to generate a second output signal |

Conducting the interpolation operation on the first output signal and the second output signal, respectively, and determining a larger one of the first output signal and the second output signal having undergone the interpolation operation as the error estimation signal with respect to the OFDM signal being affected by CCI — S107

FIG.1B

Frame_1 | Frame_2 | Frame_3 | • • • • • • | Frame_N$_F$

P1 | P2_1 | • • • | P2_N$_{P2}$ | Data_1 | Data_2 | • • • | Data_N$_D$-1 | Data_N$_D$

FIG.2

FIG.3

FIG.4A

FIG.4B

EP 3 163 828 A1

FIG.5

```
          ┌─────────────┐
          │ Executing a │ ⌐S601
          │ method for detecting CCI │      no
          │ to determine whether the OFDM │─────────┐
          │ signal is affected │               │
          │ by CCI      │               │
          └─────────────┘               │
 S603              │yes            S607  │
   ┌───────────────────────────┐   ┌───────────────────┐
   │ Executing a method for estimating CCI │   │ No need to execute the │
   │ according to the present invention to │   │ method for estimating │
   │ obtain the error estimation signal │   │ CCI according to the │
   │ when the OFDM signal is determined │   │ present invention │
   │ to be affected by CCI │   └───────────────────┘
   └───────────────────────────┘
              │
   ┌───────────────────────────┐
   │ Dividing the OFDM signal, having │
   │ undergone the channel estimation │
   │ operation, by the error estimation │─S605
   │ signal so as to eliminate effects │
   │ on the OFDM signal of CCI │
   └───────────────────────────┘
```

# FIG.6

```
                    7
         ┌─────────────────────────────────────┐
         │          Estimation Circuit          │
         │   71          73           75        │
         │ ┌─────────┐ ┌──────────┐ ┌──────────┐│
 ──────────→│Extraction│→│1st processing│→│2nd processing│→────→
         │ │ module  │ │ module   │ │ module   ││
         │ └─────────┘ └──────────┘ └──────────┘│
         └─────────────────────────────────────┘
```

# FIG.7

Europäisches
Patentamt

European
Patent Office

Office européen
des brevets

# EUROPEAN SEARCH REPORT

Application Number

EP 16 16 2818

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHAFHUBER DIETER ET AL: "MMSE estimation of time-varying channels for DVB-T systems with strong co-channel interference", 2006 14TH EUROPEAN SIGNAL PROCESSING CONFERENCE, IEEE, 3 September 2002 (2002-09-03), pages 1-4, XP032754151, ISSN: 2219-5491 [retrieved on 2015-03-27] * Sections 2 and 3 * | 1-15 | INV. H04L27/26 H04L25/02 |

TECHNICAL FIELDS
SEARCHED      (IPC)

H04L

The present search report has been drawn up for all claims

| Place of search | Date of completion of the search | Examiner |
|---|---|---|
| Munich | 10 March 2017 | Vucic, Jelena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)